# EUROPÄISCHE PATENTSCHRIFT

(11) **EP 3 492 887 B1**
(45) Veröffentlichungstag und Bekanntmachung des Hinweises auf die Patenterteilung: **23.02.2022**
(21) Anmeldenummer: 18401073.4
(22) Anmeldetag: 22.08.2018
(51) Int. Cl.: G01G 21/28

(54) **ANORDNUNG UMFASSEND EINE NIVELLIERVORRICHTUNG SOWIE EINE WÄGEEINRICHTUNG ZUM NIVELLIEREN EINER PHARMAZEUTISCHEN MESS- UND/ODER PRÜFVORRICHTUNG**
ASSEMBLY COMPRISING A LEVELLING DEVICE AND A WEIGHING APPARATUS FOR LEVELLING A PHARMACEUTICAL MEASURING AND/OR TESTING DEVICE
AGENCEMENT COMPRENANT UN DISPOSITIF DE NIVELLEMENT AINSI QU'UN DISPOSITIF DE PESÉE PERMETTANT DE NIVELER UN DISPOSITIF DE MESURE ET / OU DE VÉRIFICATION PHARMACEUTIQUE

(30) Priorität: 04.12.2017 DE 102017128761
(43) Veröffentlichungstag der Anmeldung: 05.06.2019
(73) Patentinhaber: Kraemer, Thilo, 64291 Darmstadt (DE)
(72) Erfinder: Kraemer, Thilo, 64291 Darmstadt (DE); Jezierski, Thomas, 63500 Seligenstadt (DE)
(74) Vertreter: Hamel, Armin

(56) Entgegenhaltungen:
- EP-A1- 1 541 978
- EP-A1- 2 246 675
- WO-A1-03/100362
- DE-U1-202007 013 690

## Beschreibung

Die vorliegende Erfindung liegt allgemein im technischen Gebiet der Mess- und Prüftechnik und insbesondere im Bereich der Mess- und/oder Prüfvorrichtungen für kleinvolumige Schüttgüter, insbesondere der Mess- und/oder Prüfvorrichtungen für kleine pharmazeutische Erzeugnisse, wie etwa Tabletten, Pillen, Zäpfchen oder Körner.

Insbesondere betrifft die vorliegende Erfindung eine Anordnung umfassend eine Nivelliervorrichtung sowie eine Wägeeinrichtung zum Nivellieren einer pharmazeutischen Mess- und/oder Prüfvorrichtung nach dem Anspruch 1 und ein Verfahren zum Nivellieren nach dem Anspruch 10.

Herkömmliche pharmazeutische Mess- und/oder Prüfvorrichtungen umfassen Stellbeine, die manuell und einzeln verstellbar sind. Häufig werden hierfür Gewindestangen verwendet, wobei sich durch Drehen der entsprechenden Gewindestange eines Stellbeins jeweils eine Ecke der Mess- und/oder Prüfvorrichtung in der Höhe verstellen lässt. Bei diesen bekannten Lösungen müssen die Mess- und/oder Prüfvorrichtungen an ihrem Aufstellort manuell ausgerichtet werden, was zeitaufwändig und arbeitsintensiv ist. Zudem ist das manuelle Ausrichten mitunter ungenau und fehleranfällig. Hochsensible pharmazeutische Mess- und/oder Prüfvorrichtungen, wie z.B. Wägezellen, haben herstellerseitig jedoch eine sehr geringe zulässige Abweichung hinsichtlich der Aufstell- und Betriebsbedingungen, so dass eine geringe Abweichung vom Ideal bereits zu Messfehlern führen kann, die in der Regel lange Zeit unerkannt bleiben. Dabei ist problematisch, dass selbst wenn die Oberfläche der Mess- und/oder Prüfvorrichtung eine exakte horizontale Ausrichtung aufweist, die Ausrichtung der Wägezelle nicht mit der der Mess- und/oder Prüfvorrichtung übereinstimmt, d.h., dass die Wägezelle nicht horizontal ausgerichtet ist.

Aus WO 03/100362 A1 ist eine Vorrichtung zur Betriebszustandsüberwachung für ein gravimetrisches Messgerät, insbesondere eine Waage mit einer Wägezelle, bekannt, mit einer eine Signalverarbeitungseinrichtung, eine Speichereinrichtung sowie einen Zeitgeber aufweisenden Wägeelektronik, mit einer Ausgabeeinheit sowie mindestens einem elektronischen Neigungssensor. Der Neigungssensor steht in Kommunikationsverbindung mit der Signalverarbeitungseinrichtung, wobei die Signalverarbeitungseinrichtung Mittel zur Ermittlung einer den Betriebszustand der Waage kennzeichnenden Grösse aus einem Signal des mindestens einen elektronischen Neigungssensors, sowie Mittel zur Zuordnung einer Zeitgrösse zu der den Betriebszustand der Waage kennzeichnenden Grösse und Mittel zum Übermitteln und Ablegen der entstehenden Wertevektoren in die Speichereinrichtung aufweist, wobei die Wertevektoren jederzeit für eine Weitergabe an eine Ausgabeeinheit zur Verfügung stehen.

Des Weiteren ist aus EP 2 246 675 A1 eine Wägevorrichtung mit einer Wägezelle und einem Neigungsmesser und ein Verfahren zum Wägen und Kalibrieren der Wägevorrichtung bekannt, wobei eine Neigung der Wägevorrichtung kompensiert werden kann.

Weiterhin beschreibt EP 1 541 978 A1 ein Verfahren zur Überwachung einer Ausrichtung einer Messvorrichtung, insbesondere einer Waage, mittels einer Überwachungsvorrichtung mit einem nach dem Prinzip einer Libelle arbeitenden Neigungssensor, der einen Behälter aufweist, der unter Bildung einer Blase mit einer Flüssigkeit gefüllt ist. Dabei wird die Position der Blase optisch mittels eines auf einer ersten Seite der Blase angeordneten, der Abgabe einer Strahlung dienenden Strahlungselements und eines auf der dazu gegenüberliegenden zweiten Seite der Blase angeordneten, dem Empfang der Strahlung dienenden Sensorelements, das zusammen mit dem Strahlungselement die Sensorachse bildet, gemessen, wobei auf der zweiten Seite, beidseits des Sensorelements, wenigstens je ein dem Empfang der Strahlung dienendes Referenzelement vorgesehen ist, mit denen geprüft wird, ob die Intensität der Strahlung in einem zulässigen Bereich liegt. Schließlich ist aus DE 20 2007 013 690 U1 eine Waage mit wenigstens zwei jeweils durch eine Drehverstellvorrichtung höhenverstellbaren Stützen und einem elektronischen Neigungssensor bekannt, dessen Ausgangssignal, das einen Neigungszustand der Waage repräsentiert, von einer in der Waage integrierten digitalen Datenverarbeitungseinheit zur Ermittlung der zur Erreichung einer Neigungskompensation zu betätigenden Drehverstellvorrichtung sowie der erforderlichen Drehrichtung verwendet wird. Auf einer Anzeigeeinheit werden ein Hinweis auf die ermittelte Drehverstellvorrichtung sowie eine Angabe der erforderlichen Drehrichtung durch Darstellung eines entsprechenden Rotationspfeils angezeigt, wobei ein zur Erreichung der Neigungskompensation erforderliches Gradmass der Verstellung der ermittelten Drehverstellvorrichtung in die erforderliche Drehrichtung von der digitalen Datenverarbeitungseinheit ermittelt und durch die Länge des dargestellten Rotationspfeils repräsentiert wird.

Es ist daher die Aufgabe der vorliegenden Erfindung, eine Anordnung und ein Verfahren bereitzustellen, die ein einfacheres und genaueres Ausrichten von pharmazeutischen Mess- und/oder Prüfvorrichtungen ermöglichen.

Die Aufgabe wird durch eine Anordnung umfassend eine Nivelliervorrichtung und eine Wägeeinrichtung zum Nivellieren einer pharmazeutischen Mess- und/oder Prüfvorrichtung mit den Merkmalen des Anspruchs 1 und durch ein Verfahren mit den Merkmalen des Anspruchs 10 gelöst.

Somit wird eine Anordnung aufweisend eine Nivelliervorrichtung sowie eine Wägeeinrichtung für eine pharmazeutische Mess- und/oder Prüfvorrichtung bereitgestellt, wobei mit der pharmazeutischen Mess- und/oder Prüfvorrichtung kleinvolumige Schüttgüter mess- und/oder prüfbar sind. Die Nivelliervorrichtung umfasst dabei Folgendes: eine Basis zum Tragen der pharmazeutischen Mess- und/oder Prüfvorrichtung; mindestens ein erstes antreibbar verstellbares Stellbein und ein zweites antreibbar verstellbares Stellbein, wobei das erste Stellbein und das zweite Stellbein jeweils an der Basis befestigt sind und eine Orientierung der Basis im Raum durch ein Verstellen mindestens des ersten Stellbeins und des zweiten Stellbeins festlegbar ist; mindestens einen Neigungssensor, wobei durch den mindestens einen Neigungssensor ein Rollwinkel der Basis und ein Nickwinkel der Basis erfassbar sind; wobei mindestens das erste Stellbein und das zweite Stellbein auf Grundlage der von dem Neigungssensor erfassten Daten von einer Regelungseinrichtung regelbar sind, um eine Orientierung der Basis im Raum einzustellen.

Eine Ebene im Raum lässt sich durch drei nicht kollineare Punkte definieren. Wenn die Nivelliervorrichtung also genau zwei Stellbeine umfasst, so ist zur Festlegung einer Orientierung der Basis zusätzlich ein fester Punkt an der Basis erforderlich, der nicht kollinear zu den beiden Punkten an der Basis ist, an denen das erste Stellbein und das zweite Stellbein angebracht sind. Sofern ein solcher zusätzlicher fester Punkt vorhanden ist, beispielsweise über ein nicht verstellbares Bein, kann die Regelungseinrichtung durch das Verstellen von lediglich zwei Stellbeinen den Rollwinkel und den Nickwinkel der Basis regeln. Durch ein Festlegen des Rollwinkels und des Nickwinkels der Basis wird wiederum die Orientierung der Basis im Raum eingestellt. Zu diesem Zweck empfängt die Regelungseinrichtung die Daten, die von dem mindestens einen Neigungssensor erfasst werden, und richtet in Reaktion darauf die Basis hochgenau im Raum aus. Dieses Ausrichten der Basis der Nivelliervorrichtung führt zu einer besonders hohen Prozesssicherheit beim Messen und/oder Prüfen von pharmazeutischen Erzeugnissen. So kann beispielsweise vor jeder der Qualitätssicherung dienenden Messreihe eine automatische Nivellierung durchgeführt werden, um die korrekte Ausrichtung der Mess- und/oder Prüfvorrichtung zu gewährleisten.

Die Wägeeinrichtung dient dabei als Sensor zum Ermitteln einer idealen Lage. Die ideale Lage wird dadurch erhalten, dass mittels eines Referenzgewichts der höchste Wert für die Masse ermittelt wird. Aus diesem Wert werden Sollwerte für Rollwinkel und für Nickwinkel der Basis ermittelt und abgespeichert. Diese Sollwerte werden mit den durch den mindestens einen Neigungssensor ermittelten Werten für den Rollwinkel sowie den Nickwinkel abgeglichen. Dadurch wird sichergestellt, dass geometrische Lagefehler innerhalb der Wägeeinrichtung und auch Winkelabweichungen, die bei der Montage der Wägeeinrichtung in die Mess- und/oder Prüfvorrichtung entstehen, ausgeglichen werden.

Durch die Nivelliervorrichtung entfällt überdies ein zeitaufwändiges manuelles Ausrichten der Mess- und/oder Prüfvorrichtung an ihrem Aufstellort, so dass insoweit die Gefahr von menschlichem Versagen reduziert und eine Zeitersparnis erreicht wird. Zudem ist die Mess- und/oder Prüfvorrichtung mit der Nivelliervorrichtung mobil und somit besser geeignet für Standortwechsel. Denn mit der Nivelliervorrichtung lässt sich die Orientierung der Mess- und/oder Prüfvorrichtung schnell einstellen, und etwaige Unebenheiten oder Gefälle in dem Untergrund lassen sich ausgleichen.

Eine solche Nivelliervorrichtung lässt sich vorteilhafterweise für eine Vielzahl von Mess- und/oder Prüfvorrichtungen verwenden, da die automatisierte Ausrichtung der Basis möglich ist und zu einer besonders hohen Prozesssicherheit führt. So kann beispielsweise vor jeder Messung oder Prüfung bzw. vor jeder Messreihe oder Prüfreihe eine automatische Nivellierung durchgeführt werden.

Überdies ist auch eine kontrollierte Schrägstellung der Basis und damit der Mess- und/oder Prüfvorrichtungen möglich, beispielsweise um eine Ausbringung und einen Abflussweg von Flüssigkeit für einen Waschvorgang zu optimieren.

Gemäß einer vorteilhaften Ausführungsform der Anordnung ist mindestens ein Stellbein der Nivelliervorrichtung in Form einer Teleskopstange ausgebildet. Vorzugsweise sind die Stellbeine hydraulisch oder elektromagnetisch antreibbar verstellbar. Stellbeine in Form einer Teleskopstange sind vergleichsweise einfach antreib- und regelbar. Vorzugsweise geschieht dies mit einer hydraulischen oder elektromagnetischen Antriebseinheit, die vorzugsweise von der Regelungseinrichtung regelbar ist.

Gemäß einer weiteren vorteilhaften Ausführungsform der Anordnung umfasst mindestens eines der Stellbeine einen unteren Fuß, um auf einem Untergrund zu stehen, eine Schenkelstange, die oberhalb des unteren Fußes angeordnet ist und ein unteres Ende umfasst, das mit dem unteren Fuß verbunden ist, und eine Antriebseinheit. Dabei kann ein oberes Ende der Schenkelstange in die Antriebseinheit hineinragen. Vorzugsweise kann die Antriebseinheit von der Regelungseinrichtung angesteuert werden, um die Schenkelstange durch die untere Öffnung nach unten hinauszufahren oder nach oben in die Antriebseinheit hineinzufahren, um eine Orientierung der Basis im Raum einzustellen.

Die Verbindung zwischen dem unteren Fuß und dem unteren Ende der Schenkelstange kann dabei vorteilhafterweise über ein Kugel- oder Kardangelenk erfolgen, so dass die Schenkelstange aufrecht auf dem Fuß stehen kann, selbst wenn der Fuß auf einem schiefen Untergrund steht. Die Antriebseinheit ist vorzugsweise oberhalb der Basis angeordnet, so dass sich die Stellbeine ganz einziehen lassen und die Füße ganz in der Basis verschwinden. Dann haben die Füße keinen Kontakt mehr zu dem Untergrund.

Gemäß einer anderen vorteilhaften Ausführungsform umfasst die Nivelliervorrichtung der Anordnung mindestens eine Bockrolle, die an der Basis fest angebracht ist, wobei die Basis mit der mindestens einen Bockrolle auf einem Untergrund steht, wenn die Stellbeine derart verstellt sind, dass die Stellbeine keinen Kontakt mehr zu dem Untergrund haben. Das wäre zum Beispiel der Fall, wenn die Stellbeine - wie beschrieben - jeweils Antriebseinheiten aufweisen, die oberhalb der Basis angeordnet sind, so dass sich die Stellbeine ganz einziehen lassen und die Füße ganz in der Basis verschwinden. In dieser Stellung hat die mindestens eine Bockrolle Kontakt zum Untergrund. Die Nivelliervorrichtung steht dann nicht mehr auf den Stellbeinen, sondern nur noch auf der mindestens einen Bockrolle, so dass vorteilhafterweise ein Transport der Nivelliervorrichtung bzw. der darauf angeordneten Mess- und/oder Prüfvorrichtung an einen anderen Standort deutlich vereinfacht wird.

Gemäß einer weiteren vorteilhaften Ausführungsform umfasst die Nivelliervorrichtung der Anordnung ein drittes und vorzugsweise ein viertes motorisch verstellbares Stellbein. Sobald drei oder mehr als drei Stellbeine vorgesehen sind, ist der zusätzliche feste Punkt an der Basis der Nivelliervorrichtung nicht mehr erforderlich, um die Orientierung der Basis festzulegen, denn die mindestens drei Stellbeine definieren durch drei nicht kollineare Punkte eine Ebene, so dass eine Orientierung der Basis festlegbar wird. Dadurch, dass mindestens drei Stellbeine antreibbar verstellbar sind und der zusätzliche feste Punkt an der Basis wegfällt, ist die Basis nicht mehr nur in ihrer Orientierung festlegbar, sondern auch komplett in der Höhe verstellbar. Dadurch ist die Nivelliervorrichtung oder die darauf angeordnete Mess- und/oder Prüfvorrichtung flexibler an Peripheriegeräte anbindbar.

Gemäß einer weiteren vorteilhaften Ausführungsform sind ein erster Neigungssensor und ein zweiter Neigungssensor vorgesehen, wobei durch den ersten Neigungssensor der Rollwinkel der Basis erfassbar ist und durch den zweiten Neigungssensor der Nickwinkel der Basis erfassbar ist.

In einer vorteilhaften Ausführungsform ist ein Soll-/lst-Abgleich zwischen den von dem mindestens Neigungssensor erfassten Daten und gespeicherten Sollwerten für Rollwinkel und Nickwinkel von der Regelungseinrichtung ausführbar. Auf Grundlage dieses Soll-/Ist-Abgleichs kann die Regelungseinrichtung berechnen, wie die Stellbeine verstellt werden müssen.

Die Wägeeinrichtung dient dabei als Sensor zum Ermitteln einer idealen Lage. Die ideale Lage wird dadurch erhalten, dass mittels eines Referenzgewichts der höchste Wert für die Masse ermittelt wird. Aus diesem Wert werden Sollwerte für Rollwinkel und für Nickwinkel der Basis ermittelt und abgespeichert. Diese Sollwerte werden mit den durch den mindestens einen Neigungssensor ermittelten Werten für den Rollwinkel sowie den Nickwinkel abgeglichen. Dadurch wird sichergestellt, dass geometrische Lagefehler innerhalb der Wägeeinrichtung und auch Winkelabweichungen, die bei der Montage der Wägeeinrichtung in die Mess- und/oder Prüfvorrichtung entstehen, ausgeglichen werden.

Gemäß einer vorteilhaften Ausführungsform umfasst die Nivelliervorrichtung der Anordnung darüber hinaus mindestens eine Schnittstelle. Über die Schnittstelle können die Sollwerte der Wägeeinrichtung für Rollwinkel und Nickwinkel der Basis an die Regelungseinrichtung übermittelt und gespeichert werden. So können zum Beispiel Sollwerte für die Höhe der Basis, für eine definierte Neigung der Basis, eine bestimmte Referenzorientierung der Basis im Raum oder andere Parameter hinterlegt werden. Die Schnittstelle kann beispielsweise eine Schnittstelle zu dem Mess- und/oder Prüfsystem oder auch ein Human-Machine Interface (HMI) zur direkten benutzerseitigen Eingabe von Daten sein.

Ebenfalls wird die Aufgabe gelöst durch ein Verfahren zum Nivellieren einer pharmazeutischen Mess- und/oder Prüfvorrichtung, die auf einer Basis der Nivelliervorrichtung angeordnet ist, wobei an der Basis mindestens zwei verstellbare Stellbeine befestigt sind, und mindestens einen Neigungssensor zum Erfassen eines Rollwinkels der Basis und eines Nickwinkels der Basis umfasst.

Die Wägeeinrichtung dient dabei als Sensor zum Ermitteln einer idealen Lage. Die ideale Lage wird dadurch erhalten, dass mittels eines Referenzgewichts der höchste Wert für die Masse ermittelt wird. Aus diesem Wert werden Sollwerte für Rollwinkel und für Nickwinkel der Basis ermittelt und abgespeichert. Diese Sollwerte werden mit den durch den mindestens einen Neigungssensor ermittelten Werten für den Rollwinkel sowie den Nickwinkel abgeglichen. Dadurch wird sichergestellt, dass geometrische Lagefehler innerhalb der Wägeeinrichtung und auch Winkelabweichungen, die bei der Montage der Wägeeinrichtung in die Mess- und/oder Prüfvorrichtung entstehen, ausgeglichen werden.

Das Verfahren umfasst die folgenden Schritte:
Ausführen eines Soll-/Ist-Abgleichs zwischen den von dem mindestens einen Neigungssensor erfassten Daten und gespeicherten Werten für Rollwinkel und Nickwinkel mit einer Regelungseinrichtung; und Ansteuern mindestens des ersten Stellbeins mit der Regelungseinrichtung und dadurch Verstellen mindestens des ersten Stellbeins, wodurch die Orientierung der Basis im Raum geändert wird, bis eine vorbestimmte Orientierung der Basis im Raum erreicht wird.

Vorteilhaft ist auch, dass nach Erreichen der idealen Lage die erhaltenen Werte für die Lage vom Neigungssensor erfasst und gespeichert werden, wodurch gewährleistet wird, dass bei jeder darauf folgenden erneuten Ausrichtung der Mess- und/oder Prüfvorrichtung, diese ideale Lage angefahren. Dadurch wird ein hoher Zugewinn an Prozesssicherheit sichergestellt, weil sowohl beim Justieren und Kalibrieren (was häufig an einem anderen als dem eigentlichen Einsatzort geschieht), wie auch am späteren Einsatzort der Mess- und/oder Prüfvorrichtung, stets die gleiche Lage der Wägeeinrichtung garantiert ist.

Es wird explizit auch vorgeschlagen, mehrere Merkmale der einzelnen beschriebenen Ausführungsformen untereinander zu kombinieren.

Die vorliegende Erfindung wird im Folgenden anhand der beigefügten Zeichnungen näher erläutert, in welchen:
- Figur 1: eine perspektivische Ansicht auf eine Oberseite einer Ausführungsform einer Nivelliervorrichtung mit zwei Stellbeinen zeigt;
- Figur 2: eine perspektivische Ansicht auf eine Oberseite einer Ausführungsform der Nivelliervorrichtung mit drei Stellbeinen zeigt;
- Figur 3: eine perspektivische Ansicht auf eine Unterseite einer Ausführungsform der Nivelliervorrichtung mit vier Stellbeinen zeigt;
- Figur 4: eine perspektivische Ansicht einer Vorrichtung umfassend die Nivelliervorrichtung aus Figur 3 und eine darauf angeordnete Mess- und/oder Prüfvorrichtung für kleinvolumige Schüttgüter zeigt;
- Figur 5: eine perspektivische Ansicht einer weiteren Ausführungsform der Vorrichtung zeigt; und
- Figur 6: eine weitere Ansicht der in Figur 5 dargestellten Vorrichtung zeigt.

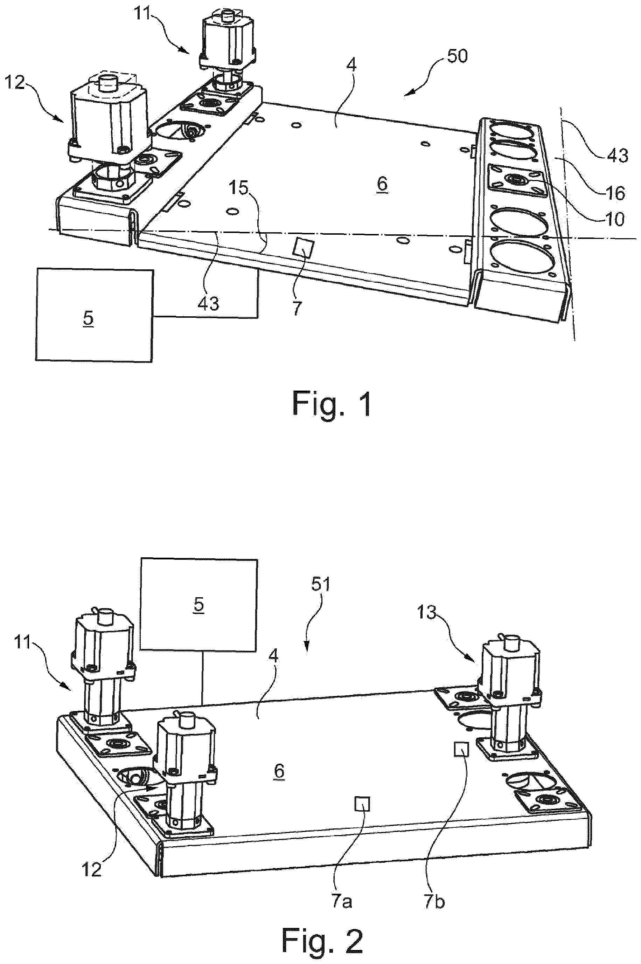

In Figur 1 ist eine Nivelliervorrichtung 50 zu sehen, die von einer Regelungseinrichtung 5 geregelt werden kann, um eine Mess- und/oder Prüfvorrichtung für kleinvolumige Schüttgüter (in Figur 1 nicht dargestellt) hochgenau auszurichten. Bei diesen Schüttgütern kann es sich beispielsweise um pharmazeutische Produkte oder auch Nahrungsergänzungsmittel handeln. Die Einheit aus Nivelliervorrichtung 50 und Mess- und/oder Prüfvorrichtung wird auch als Vorrichtung bezeichnet.

Die Nivelliervorrichtung 50 umfasst eine Basis 4. Diese Basis 4 ist geeignet, um eine Mess- und/oder Prüfvorrichtung zu tragen. Ferner umfasst die Nivelliervorrichtung 50 zwei antreibbar verstellbare Stellbeine 11, 12, die in Figur 1 jeweils auf der linken Seite an der Basis 4 befestigt sind. Ein zusätzlicher fester Punkt 10 ist auf der rechten Seite der Basis 4 zu sehen. Dabei kann es sich um ein steifes oder aussteifbares Standbein, um eine Bockrolle oder sonstiges bekanntes Bauteil handeln, das geeignet ist, die Höhe der rechten Seite der Basis 4 festzulegen. Da die beiden Stellbeine 11, 12 und der zusätzliche feste Punkt 10 nicht kollinear sind, ist die Orientierung der Basis 4 im Raum durch Verstellen der beiden Stellbeine 11, 12 festlegbar. Die Nivelliervorrichtung 50 umfasst zudem einen Neigungssensor 7, der einen Rollwinkel 15 und einen Nickwinkel 16 der Basis 4 erfasst.

Auf Grundlage der von dem Neigungssensor 7 erfassten Daten - also insbesondere auf Grundlage des Rollwinkels 15 und des Nickwinkels 16 der Basis 4 - regelt die Regelungseinrichtung 5 das erste Stellbein 11 und das zweite Stellbein 12 so, dass die Orientierung der Basis 4 eingestellt ist. Insbesondere stellt die Regelungseinrichtung 5 die Orientierung der Basis 4 so ein, dass eine Stellebene 6 auf der Oberseite der Basis 4 in der horizontalen Ebene 43 - also akkurat "im Wasser" - liegt. Zu diesem Zweck führt die Regelungseinrichtung 5 einen Soll-/Ist-Abgleich zwischen den von dem Neigungssensor 7 erfassten Daten und gespeicherten Sollwerten für Rollwinkel 15 und Nickwinkel 16 durch. Die Sollwerte können über ein Human-Machine Interface (HMI) oder eine Schnittstelle zu einem Peripheriegerät oder zu einer übergeordneten Steuerung oder Regelung an die Regelungseinrichtung 5 übermittelt werden. Aus den Ergebnissen des Soll-/Ist-Abgleichs berechnet die Regelungseinrichtung 5, wie die Stellbeine 11, 12 angesteuert und verstellt werden müssen, um die gewünschte Orientierung der Basis 4 zu erreichen.

In Figur 2 ist eine Ausführungsform der Nivelliervorrichtung 51 mit drei Stellbeinen 11, 12, 13 abgebildet. Bei dieser Ausführungsform der Nivelliervorrichtung 51 ist der zusätzliche feste Punkt nicht mehr notwendig, da bereits durch die drei nicht kollinear angebrachten Stellbeine 11, 12, 13 die Stellebene 6 der Basis 4 im Raum und damit auch ihre Orientierung festgelegt ist. Da alle drei Beine 11, 12, 13 antreibbar verstellbar sind, ist die Nivelliervorrichtung 51 komplett in der Höhe verstellbar, so dass die Nivelliervorrichtung 51 bzw. eine darauf angeordnete Mess- und/oder Prüfvorrichtung flexibler an Peripheriegeräte anbindbar ist (in Figur 2 nicht dargestellt). Die Nivelliervorrichtung 51 umfasst anstelle eines einzigen Neigungssensors einen ersten Neigungssensor 7a und einen zweiten Neigungssensor 7b. Der erste Neigungssensor 7a erfasst einen Rollwinkel 15 der Basis 4 und der zweite Neigungssensor 7b erfasst einen Nickwinkel 16 der Basis 4.

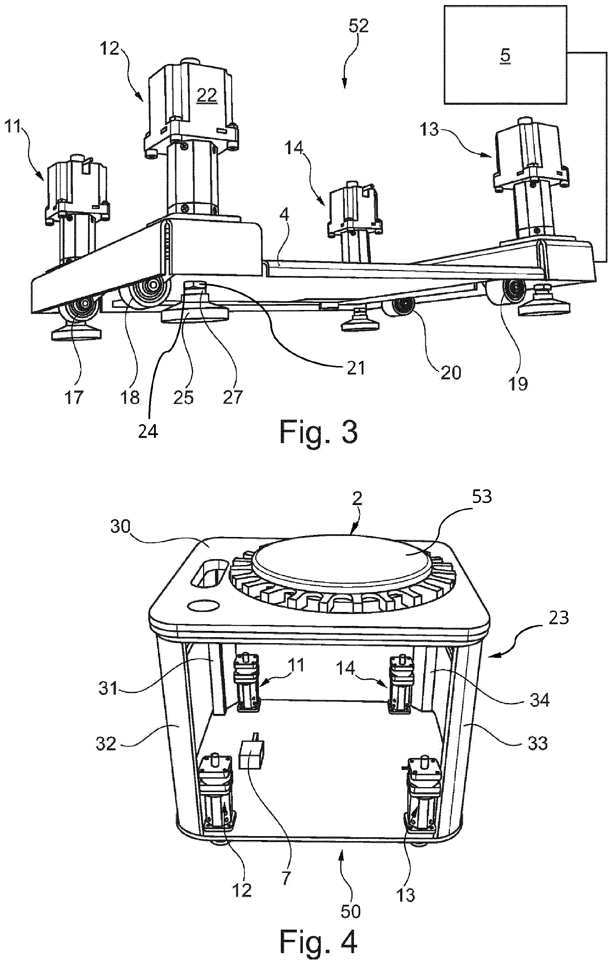

Figur 3 zeigt schließlich eine Ausführungsform der Nivelliervorrichtung 52 mit vier Stellbeinen 11, 12, 13, 14, wobei eine Unterseite der Basis 4 sichtbar ist. Der auf der Oberseite angebrachte mindestens eine Neigungssensor ist daher in Figur 3 nicht zu sehen. Diese Ausführungsform steht noch stabiler als die Ausführungsform mit drei Stellbeinen aus Figur 2. Zudem sind in Figur 3 vier Bockrollen 17, 18, 19, 20 zu sehen, die von unten an der Basis 4 fest angebracht sind. Wenn die Stellbeine 11, 12, 13, 14 derart verstellt sind, dass sie keinen Kontakt mehr zu einem Untergrund (in den Figuren nicht dargestellt) haben, steht die Nivelliervorrichtung auf den Bockrollen 17, 18, 19, 20 und lässt sich durch einfaches Schieben bzw. Rollen transportieren.

Zudem wird deutlich, wie die Stellbeine 11, 12, 13, 14 als Teleskopstangen aufgebaut sind. Jedes Stellbein 11, 12, 13, 14 umfasst einen unteren Fuß 25, um auf dem Untergrund zu stehen. Dabei ist nur ein Fuß mit einer Bezugszahl versehen. Zudem umfasst jedes Stellbein 11, 12, 13, 14 eine Schenkelstange 21, die oberhalb des unteren Fußes 25 angeordnet ist und ein unteres Ende 24 umfasst, das mit dem unteren Fuß 25 über ein Kugelgelenk 27 verbunden ist, und eine Antriebseinheit 22. Dabei ist der Übersicht halber nur das Stellbein 12 mit den entsprechenden Bezugszahlen versehen. Die Antriebseinheit 22 kann von der Regelungseinrichtung 5 angesteuert werden, um die Schenkelstange 21 nach unten hinauszufahren oder nach oben in die Antriebseinheit 22 hineinzufahren um eine Orientierung der Basis 4 im Raum einzustellen.

In Figur 4 ist beispielhaft eine Ausführungsform der Nivelliervorrichtung 52 mit vier Stellbeinen 11, 12, 13, 14 dargestellt. Auf der Basis 4 der Nivelliervorrichtung 52 ist über vier Tischbeine 31, 32, 33, 34 ein Tisch 30 mit einer Mess- und Prüfvorrichtung 2 für kleinvolumige Schüttgüter angeordnet. Nivelliervorrichtung 52 sowie die Mess- und/oder Prüfvorrichtung 2 bilden eine Vorrichtung 23. Die Mess- und/oder Prüfvorrichtung 2 ist in Figur 4 nur ausschnittsweise dargestellt und besitzt einen Transportstern, mit dem die Schüttgüter zu den einzelnen Messstationen, wie zum Beispiel zu einer Wägeeinrichtung, transportiert werden können. Die Wägeeinrichtung bildet zusammen mit der Nivelliervorrichtung 52 eine Anordnung zum Nivellieren der pharmazeutischen Mess- und/oder Prüfvorrichtung 2.

Messstationen, wie zum Beispiel die Wägeeinrichtung, sind in Figur 4 der Übersicht halber nicht dargestellt.

Durch die Nivelliervorrichtung 52 ist, vorzugsweise zusammen mit der Wägeeinrichtung, sichergestellt, dass die Mess- und Prüfvorrichtung 2 beim Messen bzw. Prüfen kleinvolumiger Schüttgüter, wie beispielsweise Tabletten, Pillen, Zäpfchen oder Körner, hochgenau ausgerichtet ist. Dadurch wird eine hohe Prozesssicherheit gewährleistet.

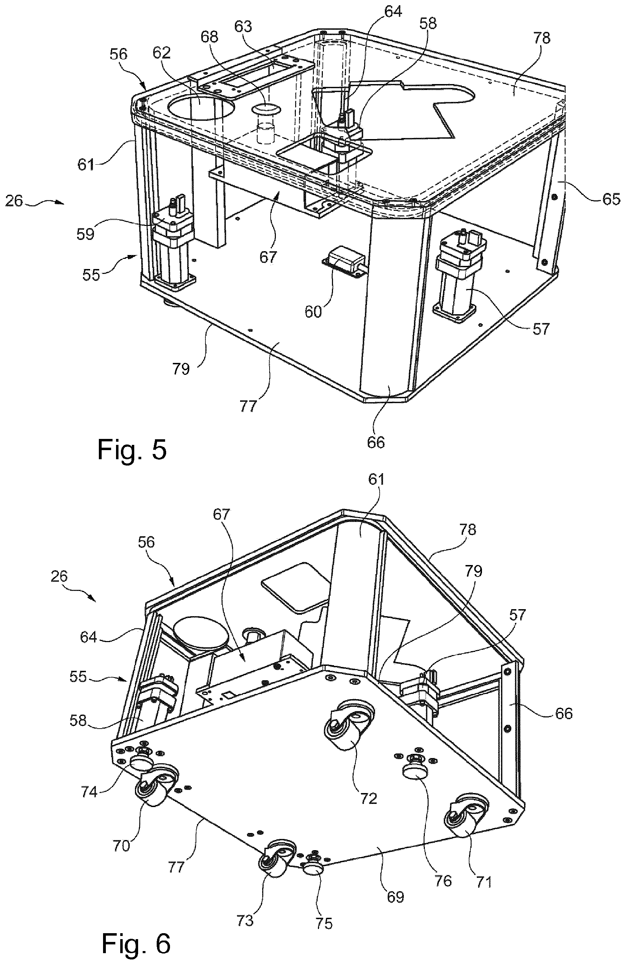

Figur 5 zeigt eine weitere Ausführungsform einer Vorrichtung 26 umfassend eine Nivelliervorrichtung 55 und eine Mess- und/oder Prüfvorrichtung 56, die perspektivisch dargestellt ist. Die Nivelliervorrichtung 55 umfasst einen Tisch 78, auf dem die Mess- und/oder Prüfvorrichtung 56 angebracht ist. Der Tisch 78 ist auf mehreren Tischbeinen 61 bis 66 angeordnet. Diese Mess- und/oder Prüfvorrichtung 56 ist jedoch nur schematisch dargestellt, so dass auch ein Transportstern nicht gezeigt ist. Die Nivelliervorrichtung 55 besitzt, wie auch die Nivelliervorrichtung 2 nach Figur 2, drei Stellbeine 57, 58, 59 sowie einen Neigungssensor 60, die auf einer Basis 77 angeordnet sind. Die beiden Stellbeine 57, 58 bilden dabei das erste Stellbein 57 und das zweite Stellbein 58. Mit dem Neigungssensor 60 können der Rollwinkel und der Nickwinkel erfasst werden. Auf Grundlage der von dem Neigungssensor 60 erfassten Daten - also insbesondere auf Grundlage des Rollwinkels und des Nickwinkels der Basis 77 - regelt die Regelungseinrichtung (nicht gezeigt) die Stellbeine 58 und 57, so dass die Orientierung der Basis 77 eingestellt ist. Diese Stellbeine 57, 58, 59 sind wie die Stellbeine 11, 12, 13, 14 aufgebaut und sind daher ebenfalls motorisch verstellbar.

An den beiden Tischbeinen 62 und 63 ist eine Wägeeinrichtung 67 angebracht, die einen Wägeteller 68 umfasst, auf dem kleinvolumige Schüttgüter aufgelegt werden können, um diese zu wiegen. Die Wägeeinrichtung 67 bildet zusammen mit der Nivelliervorrichtung 55 eine Anordnung zum Nivellieren der Mess- und/oder Prüfvorrichtung 56. Vorteilhaft ist dabei, dass die Wägeeinrichtung 67 zudem als Sensor bzw. Indikator zum Ermitteln einer idealen Lage (Referenzposition) dient.

Die ideale Lage ist dadurch gekennzeichnet, dass die Krafteinleitung des auf dem Wägeteller 68 befindlichen Schüttguts absolut lotrecht ist, das bedeutet, dass die gesamte Gewichtskraft des Schüttguts von der Wägeeinrichtung 67 aufgenommen wird und somit keine Anteile der Gewichtskraft durch Winkelfehler unerfasst bleiben.

Dadurch wird sichergestellt, dass geometrische Lagefehler innerhalb der Wägeeinrichtung 67 und auch Winkelabweichungen, die bei der Montage der Wägeeinrichtung 67 in die Mess- und/oder Prüfvorrichtung 56 entstehen, ausgeglichen werden.

Besonders vorteilhaft ist der hohe Zugewinn an Prozesssicherheit, weil sowohl beim Justieren und Kalibrieren (was häufig an einem anderen als dem eigentlichen Einsatzort geschieht), wie auch am späteren Einsatzort der Mess- und/oder Prüfvorrichtung 56, stets die gleiche Lage der Wägeeinrichtung 67 garantiert ist. Dies bedeutet, dass etwaige Abweichungen in den Aufstellbedingungen zwischen dem Ort, an dem die Justierung stattfindet, und dem späteren Einsatzort der Mess- und/oder Prüfvorrichtung 56 keinen Einfluss auf die Messergebnisse der integrierten Wägeeinrichtung 67 haben. Auch spielen Positionsänderungen der Mess- und/oder Prüfvorrichtung 56 keine Rolle mehr.

Die Wägeeinrichtung 67 soll dazu vor der Auslieferung oder nach Austausch der Wägeeinrichtung 67 über eine Software-Funktion zum Anlernen der idealen Lage genutzt werden. Ist die ideale Lage erreicht, so werden die Werte vom Neigungssensor 60 erfasst und gespeichert. Bei jeder folgenden Ausrichtung der Mess- und/oder Prüfvorrichtung 56 oder nach Versetzen der Mess- und/oder Prüfvorrichtung 56 an einen anderen Einsatzort wird, unabhängig von der Beschaffenheit des Untergrundes, stets diese ideale Lage angefahren. Hierzu werden dann ausschließlich die Signale des Neigungssensors 60 ausgewertet, da dieser erschütterungsunempfindlich ist. Damit ist eine zügige Ausrichtung der Mess- und/oder Prüfvorrichtung 56 gegeben.

Die Nivelliervorrichtung 55 wird durch eine Regelungseinrichtung 79 geregelt, um die Mess- und/oder Prüfvorrichtung 56 für kleinvolumige Schüttgüter hochgenau auszurichten.

In Figur 6 ist eine weitere Ansicht der in Figur 5 dargestellten Anordnung aus Nivelliervorrichtung 55 und Wägeeinrichtung 67 gezeigt. An einer Unterseite 69 der Basis 77 der Nivelliervorrichtung 55 sind vier Bockrollen 70 bis 73 vorgesehen, so dass die Anordnung 26 einfach bewegt werden kann. Die Nivelliervorrichtung 55 weist zudem drei Füße 74, 75, 76 auf, wobei jeder Fuß 74, 75, 76 einem Stellbein 58, 57 zugeordnet ist. Mit den Füßen 74, 75, 76 kann die Mess- und/oder Prüfvorrichtung 56 fest auf dem Untergrund (nicht dargestellt) stehen.

Es versteht sich, dass bei der Anordnung die Nivelliervorrichtung ein Peripheriegerät zu der Mess- und/oder Prüfvorrichtung sein kann, oder als gänzlich von der Mess- und/oder Prüfvorrichtung unabhängige Vorrichtung zum Nivellieren der Mess- und/oder Prüfvorrichtung ausgestaltet sein kann.

### Bezugszeichenliste

- 2: Mess- und/oder Prüfvorrichtung
- 4: Basis
- 5: Regelungseinrichtung
- 6: Stellebene der Basis
- 7: Neigungssensor
- 7a: Erster Neigungssensor
- 7b: Zweiter Neigungssensor
- 10: Zusätzlicher fester Punkt
- 11: Erstes Stellbein
- 12: Zweites Stellbein
- 13: Drittes Stellbein
- 14: Viertes Stellbein
- 15: Rollwinkel der Basis
- 16: Nickwinkel der Basis
- 17: Erste Bockrolle
- 18: Zweite Bockrolle
- 19: Dritte Bockrolle
- 20: Vierte Bockrolle
- 21: Schenkelstange
- 22: Antriebseinheit
- 23: Anordnung
- 24: Unteres Ende der Schenkelstange
- 25: Fuß
- 26: Anordnung
- 27: Kugelgelenk
- 30: Tisch
- 31: Erstes Tischbein
- 32: Zweites Tischbein
- 33: Drittes Tischbein
- 34: Viertes Tischbein
- 42: Im Wesentlichen horizontal verlaufende Achse
- 43: Horizontale
- 50: Nivelliervorrichtung mit zwei Stellbeinen
- 51: Nivelliervorrichtung mit drei Stellbeinen
- 52: Nivelliervorrichtung mit vier Stellbeinen
- 53: Transportstern
- 55: Nivelliervorrichtung
- 56: Mess- und/oder Prüfvorrichtung
- 57: Stellbein
- 58: Stellbein
- 59: Stellbein
- 60: Neigungssensor
- 61: Tischbein
- 62: Tischbein
- 63: Tischbein
- 64: Tischbein
- 65: Tischbein
- 66: Tischbein
- 67: Wägeeinrichtung
- 68: Wägeteller
- 69: Unterseite
- 70: Erste Bockrolle
- 71: Zweite Bockrolle
- 72: Dritte Bockrolle
- 73: Vierte Bockrolle
- 74: Fuß
- 75: Fuß
- 76: Fuß
- 77: Basis
- 78: Tisch
- 79: Regelungseinrichtung

## Patentansprüche

1. Anordnung (23, 26) umfassend eine Nivelliervorrichtung (50, 51, 52, 55) sowie eine Wägeeinrichtung (67) zum Nivellieren einer pharmazeutischen Mess- und/oder Prüfvorrichtung (2, 56), wobei mit der pharmazeutischen Mess- und/oder Prüfvorrichtung (2, 56) kleinvolumige Schüttgüter mess- und/oder prüfbar sind, wobei die Nivelliervorrichtung (50, 51, 52, 55) umfasst: eine Basis (4, 77) zum Tragen der pharmazeutischen Mess- und/oder Prüfvorrichtung (2); mindestens ein erstes antreibbar verstellbares Stellbein (11, 58) und ein zweites antreibbar verstellbares Stellbein (12, 59), wobei das erste Stellbein (11, 58) und das zweite Stellbein (12, 59) jeweils an der Basis (4, 77) befestigt sind und eine Orientierung der Basis (4, 77) im Raum durch ein Verstellen mindestens des ersten Stellbeins (11, 58) und des zweiten Stellbeins (12, 59) festlegbar ist; wobei die Wägeeinrichtung (67) als Sensor zum Ermitteln einer idealen Lage ausgebildet ist, wobei die ideale Lage dadurch erhaltbar ist, dass mittels eines Referenzgewichts ein höchster Wert für eine Masse ermittelt wird, wodurch sichergestellt wird, dass geometrische Lagefehler innerhalb der Wägeeinrichtung (67) und auch Winkelabweichungen, die bei der Montage der Wägeeinrichtung (67) in der Mess- und/oder Prüfvorrichtung (2, 56) entstehen, ausgeglichen werden; mindestens einen Neigungssensor (7, 7a, 7b, 60), wobei durch den mindestens einen Neigungssensor (7, 7a, 7b, 60) ein Rollwinkel (15) der Basis (4, 77) und ein Nickwinkel (16) der Basis (4, 77) erfassbar sind; wobei mindestens das erste Stellbein (11, 58) und das zweite Stellbein (12, 59) auf Grundlage der von dem Neigungssensor (7, 7a, 7b, 60) erfassten Daten von einer Regelungseinrichtung (5, 79) regelbar sind, um eine Orientierung der Basis (4, 77) im Raum einzustellen.

2. Anordnung nach Anspruch 1, **dadurch gekennzeichnet, dass**
mindestens ein Stellbein (11, 12, 13, 14, 57, 58, 59) in Form einer Teleskopstange ausgebildet ist.

3. Anordnung nach Anspruch 1, **dadurch gekennzeichnet, dass** die Stellbeine (11, 12, 13, 14, 57, 58, 59) hydraulisch oder elektromagnetisch antreibbar verstellbar sind.

4. Anordnung nach Anspruch 1, **dadurch gekennzeichnet, dass** mindestens ein Stellbein (11, 12, 13, 14, 57, 58, 59) die folgenden Komponenten umfasst: einen unteren Fuß (25, 74, 75, 76), um auf einem Untergrund zu stehen, eine Schenkelstange (21), die oberhalb des unteren Fußes (25, 74, 75, 76) angeordnet ist und ein unteres Ende (24) umfasst, das mit dem unteren Fuß (25, 74, 75, 76) verbunden ist, und eine Antriebseinheit (22), wobei die Antriebseinheit (22) von der Regelungseinrichtung (5, 79) ansteuerbar ist, um die Schenkelstange (21) nach unten hinauszufahren oder nach oben in die Antriebseinheit (22) hineinzufahren um eine Orientierung der Basis (4, 77) im Raum einzustellen.

5. Anordnung nach Anspruch 1, **dadurch gekennzeichnet, dass** die Nivelliervorrichtung (52) mindestens eine Bockrolle (17, 18,19, 20, 70, 71, 72, 73) umfasst, die an der Basis (4, 77) fest angebracht ist, wobei die Basis (4, 77) mit der mindestens einen Bockrolle (17, 18, 19, 20, 70, 71, 72, 73) auf einem Untergrund steht, wenn die Stellbeine (11, 12, 13, 14, 57, 58, 59) derart verstellt sind, dass die Stellbeine (11, 12, 13, 14, 57, 58, 59) keinen Kontakt mehr zu dem Untergrund haben.

6. Anordnung nach Anspruch 1, **dadurch gekennzeichnet, dass** ein drittes motorisch verstellbares Stellbein (13, 59) vorgesehen ist.

7. Anordnung nach Anspruch 6, **dadurch gekennzeichnet, dass** die Nivelliervorrichtung (52) ein viertes motorisch verstellbares Stellbein (14) aufweist.

8. Anordnung nach Anspruch 1, **dadurch gekennzeichnet, dass** ein erster Neigungssensor (7a) und ein zweiter Neigungssensor (7b) vorgesehen sind, wobei durch den ersten Neigungssensor (7a) der Rollwinkel (15) der Basis (4) erfassbar ist und durch den zweiten Neigungssensor (7b) der Nickwinkel (16) der Basis (4) erfassbar ist; und dass ein Soll-/Ist-Abgleich zwischen den von dem ersten Neigungssensor (7a) und dem zweiten Neigungssensor (7b) erfassten Daten und gespeicherten Sollwerten für Rollwinkel (15) und Nickwinkel (16) von der Regelungseinrichtung (5, 79) ausführbar ist.

9. Anordnung nach Anspruch 1, **dadurch gekennzeichnet, dass** mindestens eine Schnittstelle vorgesehen ist, über die die Sollwerte der Wägeeinrichtung (67) für Rollwinkel (15) und Nickwinkel (16) an die Regelungseinrichtung (5, 79) übermittelbar sind.

10. Verfahren zum Nivellieren einer pharmazeutischen Mess- und/oder Prüfvorrichtung (2, 56) für kleinvolumige Schüttgüter mittels einer Anordnung umfassend eine Nivelliervorrichtung (50, 51, 52, 55) sowie eine Wägeeinrichtung (67), wobei die Wägeeinrichtung (67) als Sensor zum Ermitteln einer idealen Lage dient, wobei die ideale Lage dadurch erhalten wird, dass mittels eines Referenzgewichts ein höchster Wert für eine Masse ermittelt wird, wodurch sichergestellt wird, dass geometrische Lagefehler innerhalb der Wägeeinrichtung (67) und auch Winkelabweichungen, die bei der Montage der Wägeeinrichtung (67) in der Mess- und/oder Prüfvorrichtung (2, 56) entstehen, ausgeglichen werden, wobei die pharmazeutische Mess- und/oder Prüfvorrichtung (2, 56) auf einer Basis (4, 77) der Nivelliervorrichtung (50, 51, 52, 55) angeordnet ist, wobei an der Basis (4, 77) mindestens ein erstes verstellbares Stellbein (11, 57) und ein zweites verstellbares Stellbein (12, 58) vorgesehen sind, die jeweils an der Basis (4, 77) befestigt sind; und mindestens einen Neigungssensor (7, 7a, 7b, 60) zum Erfassen eines Rollwinkels (15) der Basis (4, 77) und eines Nickwinkels (16) der Basis (4, 77) aufweist; wobei das Verfahren die folgenden Schritte umfasst: Ausführen eines Soll-/Ist-Abgleichs zwischen den von dem mindestens einen Neigungssensor (7, 7a, 7b, 60) erfassten Daten und gespeicherten Werten für Rollwinkel (15) und Nickwinkel (16) mit einer Regelungseinrichtung (5, 79); und Ansteuern mindestens des ersten Stellbeins (11, 57) mit der Regelungseinrichtung (5, 79) und dadurch Verstellen mindestens des ersten Stellbeins (11, 57), wodurch die Orientierung der Basis (4, 77) im Raum geändert wird, bis eine vorbestimmte Orientierung der Basis (4, 77) im Raum erreicht wird.

11. Verfahren zum Nivellieren einer pharmazeutischen Mess- und/oder Prüfvorrichtung (2, 56) für kleinvolumige Schüttgüter nach Anspruch 10, **dadurch gekennzeichnet, dass** nach Erreichen der idealen Lage die erhaltenen Werte von mindestens einem Neigungssensor (60) erfasst und gespeichert werden, wodurch gewährleistet wird, dass bei jeder darauf folgenden erneuten Ausrichtung der Mess- und/oder Prüfvorrichtung (56) diese ideale Lage angefahren wird.

## Claims

1. Assembly (23, 26) comprising a leveling device (50, 51, 52, 55) as well as a weighing apparatus (67) for leveling a pharmaceutical measuring and/or testing device (2, 56), wherein with the pharmaceutical measuring and/or testing device (2, 56) small-sized bulk goods can be measured and/or tested, wherein the leveling device (50, 51, 52, 55) comprises: a base (4, 77) for supporting the pharmaceutical measuring and/or testing device (2, 56); at least one first drivably adjustable adjustment leg (11, 58) and a second drivably adjustable adjustment leg (12, 59), wherein the first adjustment leg (11, 58) and the second adjustment leg (12, 59) are each secured on the base (4, 77) and the orientation of the base (4, 11) in space is definable by the adjustment of at least the first adjustment leg (11, 58) and of the second adjustment leg (12, 59); wherein the weighing apparatus (67) is developed as a sensor for determining an ideal position, wherein the ideal position is obtainable thereby that by means of a reference weight a highest value for a mass is determined whereby it is ensured that geometric positional errors within the weighing apparatus (67) and also angular deviations originating in the mounting of the weighing apparatus (67) in the measuring and/or testing device (2, 56) are compensated; at least one inclination sensor (7, 7a, 7b, 60), wherein through the at least one inclination sensor (7, 7a, 7b, 60) a rolling angle (15) of the base (4, 77) and a tilting angle (16) of the base (4, 77) can be acquired; wherein at least the first adjustment leg (11, 58) and the second adjustment leg (12, 59) are controllable by a controller apparatus (5, 79) on the basis of the data acquired by the inclination sensor (7, 7a, 7b, 60) in order to set the orientation of the base (4, 77) in space.

2. Assembly as in claim 1, **characterized in that** at least one adjustment leg (11, 12, 13, 14, 57, 58, 59) is developed in the form of a telescope bar.

3. Assembly as in claim 1, **characterized in that** the adjustment legs (11, 12, 13, 14, 57, 58, 59) are hydraulically or electromagnetically drivable adjustable.

4. Assembly as in claim 1, **characterized in that** at least one adjustment leg (11, 12, 13, 14, 57, 58, 59) comprises the following components: a lower foot (25, 74, 75, 76) to stand on a bottom ground, a leg bar (21), which is disposed above the lower foot (25, 74, 75, 76) and comprises a lower end (24) connected with the lower foot (25, 74, 75, 76), and a drive unit (22), wherein the drive unit (22) is actuatable by the controller apparatus (5, 79) in order to drive the leg bar (21) outwardly in the downward direction or upwardly into the drive unit (22) in order to set the orientation of the base (4, 77) in space.

5. Assembly as in claim 1, **characterized in that** the leveling device (52) comprises at least one fixed castor (17, 18, 19, 20, 70, 71, 72, 73) fixedly secured on the base (4, 77), wherein the base (4, 77) stands with the at least one fixed castor (17, 18, 19, 20, 70, 71, 72, 73) on a bottom ground when the adjustment legs (11, 12, 13, 14, 57, 58, 59) are adjusted such that the adjustment legs (11, 12, 13, 14, 57, 58, 59) no longer have any contact with the bottom ground.

6. Assembly as in claim 1, **characterized in that** a third motor-adjustable adjustment leg (13, 59) is provided.

7. Assembly as in claim 6, **characterized in that** the leveling device (52) comprises a fourth motor-adjustable adjustment leg (14).

8. Assembly as in claim 1, **characterized in that** a first inclination sensor (7a) and a second inclination sensor (7b) are provided, wherein through the first inclination sensor (7a) the rolling angle (15) of the base (4) can be acquired and through the second inclination sensor (7b) the tilting angle (16) of the base (4) can be acquired and that a nominal /actual comparison can be carried out by the controller apparatus (5, 79) between the data acquired by the first inclination sensor (7a) and the data acquired by the second inclination sensor (7b) and the stored nominal values for rolling angle (15) and tilting angle (16).

9. Assembly as in claim 1, **characterized in that** at least one interface is provided across which the nominal values of the weighting apparatus (67) for rolling angle (15) and tilting angle (16) can be transmitted to the controller apparatus (5,79).

10. Method for leveling a pharmaceutical measuring and/or testing device (2, 56) for small-sized bulk goods by means of an assembly comprising a leveling device (50, 51, 52, 55) as well as a weighing apparatus (67), wherein the weighing apparatus (67) serves as a sensor for determining an ideal position, wherein the ideal position is obtained thereby that by means of a reference weight a highest value for a mass is determined, whereby it is ensured that geometric positional errors within the weighing apparatus (67) and also angular deviations generated during the assembly of the weighing apparatus (67) in the measuring and/or testing device (2, 56) are compensated, wherein the pharmaceutical measuring and/or testing device (2, 56) is disposed on a base (4, 77) of the leveling device (50, 51, 52, 55), wherein on the base (4, 77) at least one first adjustable adjustment leg (11, 57) and one second adjustable adjustment leg (12, 58) are provided, each of which being secured on the base (4, 77); and comprises at least one inclination sensor (7, 7a, 7b, 60) for acquiring a rolling angle (15) of the base (4, 77) and a tilting angle (16) of the base (4, 77); wherein the method comprises the following steps: performing a nominal / actual comparison between the data acquired by the at least one inclination sensor (7, 7a, 7b, 60) and stored values for the rolling angle (15) and for the tilting angle (16) with a controller apparatus (5, 79); and actuating at least the first adjustment leg (11, 57) with the controller apparatus (5, 79) and thereby adjusting at least the first adjustment leg (11, 57), whereby the orientation of the base (4, 77) in space is changed until a predetermined orientation of the base (4, 77) in space is attained.

11. Method for leveling a pharmaceutical measuring and/or testing device (2, 56) for small-sized bulk goods as in claim 10, **characterized in that** after attaining the ideal position, the obtained values are acquired and stored by at least one inclination sensor (60) whereby it is ensured that at each subsequent renewed orientation of the measuring and/or testing device (56) this ideal position is started up.

## Revendications

1. Arrangement (23, 26), comprenant un dispositif de mise à niveau (50, 51, 52, 55) ainsi qu'un appareil de pesage (67) destiné à la mise à niveau d'un dispositif de mesure et/ou contrôle pharmaceutique (2, 56), des matières en vrac en faible volume pouvant être mesurées et/ou contrôlées avec le dispositif de mesure et/ou contrôle pharmaceutique (2, 56), le dispositif de mise à niveau (50, 51, 52, 55) comprenant :
une base (4, 77) servant à porter le dispositif de mesure et/ou contrôle pharmaceutique (2) ; au moins un premier pied de réglage (11, 58) positionnable et pouvant être entraîné et un deuxième pied de réglage (12, 59) positionnable et pouvant être entraîné, le premier pied de réglage (11, 58) et le deuxième pied de réglage (12, 59) étant respectivement fixés à la base (4, 77) et une orientation de la base (4, 77) dans l'espace pouvant être spécifiée par un positionnement d'au moins le premier pied de réglage (11, 58) et le deuxième pied de réglage (12, 59) ; l'appareil de pesage (67) étant réalisé sous la forme d'un capteur destiné à déterminer une position idéale, la position idéale pouvant être obtenue en déterminant une valeur maximale pour une masse au moyen d'un poids de référence, moyennant quoi il est garanti que les erreurs de position géométriques à l'intérieur de l'appareil de pesage (67) ainsi que les écarts angulaires qui se produisent dans le dispositif de mesure et/ou contrôle (2, 56) lors du montage de l'appareil de pesage (67) sont compensés ;
au moins un capteur d'inclinaison (7, 7a, 7b, 60), un angle de roulis (15) de la base (4, 77) et un angle de tangage (16) de la base (4, 77) pouvant être acquis par l'au moins un capteur d'inclinaison (7, 7a, 7b, 60) ; au moins le premier pied de réglage (11, 58) et le deuxième pied de réglage (12, 59) pouvant être régulés par un appareil de régulation (5, 79) sur la base des données acquises par le capteur d'inclinaison (7, 7a, 7b, 60) afin de régler une orientation de la base (4, 77) dans l'espace.

2. Arrangement selon la revendication 1, **caractérisé en ce qu'**au moins un pied de réglage (11, 12, 13, 14, 57, 58, 59) est réalisé sous la forme d'une tige télescopique.

3. Arrangement selon la revendication 1, **caractérisé en ce que** les pieds de réglage (11, 12, 13, 14, 57, 58, 59) sont positionnables et peuvent être entraînés hydrauliquement ou de manière électromagnétique.

4. Arrangement selon la revendication 1, **caractérisé en ce qu'**au moins un pied de réglage (11, 12, 13, 14, 57, 58, 59) comprend les composants suivants : un pied inférieur (25, 74, 75, 76), pour reposer sur un substrat, une barre de poteau (21), qui est disposée au-dessus du pied inférieur (25, 74, 75, 76) et comporte une extrémité inférieure (24), laquelle est reliée au pied inférieur (25, 74, 75, 76), et une unité d'entraînement (22), l'unité d'entraînement (22) pouvant être commandée par l'appareil de régulation (5, 79) afin de faire sortir la barre de poteau (21) vers le bas ou la faire rentrer dans l'unité d'entraînement (22) vers le haut en vue de régler une orientation de la base (4, 77) dans l'espace.

5. Arrangement selon la revendication 1, **caractérisé en ce que** le dispositif de mise à niveau (52) comporte au moins une roulette fixe (17, 18, 19, 20, 70, 71, 72, 73), qui est montée à demeure sur la base (4, 77), la base (4, 77) reposant sur un substrat avec l'au moins une roulette fixe (17, 18, 19, 20, 70, 71, 72, 73) lorsque les pieds de réglage (11, 12, 13, 14, 57, 58, 59) sont positionnés de telle sorte que les pieds de réglage (11, 12, 13, 14, 57, 58, 59) n'ont plus aucun contact avec le substrat.

6. Arrangement selon la revendication 1, **caractérisé en ce qu'**un troisième pied de réglage (13, 59) positionnable par moteur est présent.

7. Arrangement selon la revendication 6, **caractérisé en ce que** le dispositif de mise à niveau (52) comporte un quatrième pied de réglage (14) positionnable par moteur.

8. Arrangement selon la revendication 1, **caractérisé en ce qu'**un premier capteur d'inclinaison (7a) et un deuxième capteur d'inclinaison (7b) sont présents, l'angle de roulis (15) de la base (4) pouvant être acquis par le premier capteur d'inclinaison (7a) et l'angle de tangage (16) de la base (4) pouvant être acquis par le deuxième capteur d'inclinaison (7b) ; et **en ce qu'**un équilibrage consigne/réel entre les données acquises par le premier capteur d'inclinaison (7a) et par le deuxième capteur d'inclinaison (7b) et des valeurs de consigne mémorisées pour l'angle de roulis (15) et l'angle de tangage (16) peut être réalisé par l'appareil de régulation (5, 79).

9. Arrangement selon la revendication 1, **caractérisé en ce qu'**au moins une interface est présente, par le biais de laquelle les valeurs de consigne de l'appareil de pesage (67) pour l'angle de roulis (15) et l'angle de tangage (16) peuvent être communiquées à l'appareil de régulation (5, 79).

10. Procédé de mise à niveau d'un dispositif de mesure et/ou contrôle pharmaceutique (2, 56) pour des matières en vrac en faible volume au moyen d'un arrangement, comprenant un dispositif de mise à niveau (50, 51, 52, 55) ainsi qu'un appareil de pesage (67), l'appareil de pesage (67) en tant que capteur servant à déterminer une position idéale, la position idéale étant obtenue en déterminant une valeur maximale pour une masse au moyen d'un poids de référence, moyennant quoi il est garanti que les erreurs de position géométriques à l'intérieur de l'appareil de pesage (67) ainsi que les écarts angulaires qui se produisent dans le dispositif de mesure et/ou contrôle (2, 56) lors du montage de l'appareil de pesage (67) sont compensées, le dispositif de mesure et/ou contrôle pharmaceutique (2, 56) étant disposé sur une base (4, 77) du dispositif de mise à niveau (50, 51, 52, 55), au moins un premier pied de réglage (11, 57) positionnable et un deuxième pied de réglage (12, 58) positionnable étant présents au niveau de la base (4, 77), lesquels sont respectivement fixés à la base (4, 77) ; et possédant au moins un capteur d'inclinaison (7, 7a, 7b, 60) destiné à acquérir un angle de roulis (15) de la base (4, 77) et un angle de tangage (16) de la base (4, 77) ; le procédé comprenant les étapes suivantes : exécution d'un équilibrage consigne/réel entre les données acquises par l'au moins un capteur d'inclinaison (7, 7a, 7b, 60) et des valeurs de consigne mémorisées pour l'angle de roulis (15) et l'angle de tangage (16) avec un appareil de régulation (5, 79) ; et commande au moins du premier pied de réglage (11, 57) avec l'appareil de régulation (5, 79) et ainsi positionnement au moins du premier pied de réglage (11, 57), moyennant quoi l'orientation de la base (4, 77) dans l'espace est modifiée jusqu'à atteindre une orientation prédéterminée de la base (4, 77) dans l'espace.

11. Procédé de mise à niveau d'un dispositif de mesure et/ou contrôle pharmaceutique (2, 56) pour des matières en vrac en faible volume selon la revendication 10, **caractérisé en ce qu'**après avoir atteint la position idéale, les valeurs obtenues sont acquises par au moins un capteur d'inclinaison (60) et mémorisées, moyennant quoi il est garanti que cette position idéale est gagnée lors de chaque nouvelle orientation postérieure du dispositif de mesure et/ou contrôle pharmaceutique (56).
